# EUROPÄISCHE PATENTSCHRIFT

(11) **EP 1 436 496 B1**
(45) Veröffentlichungstag und Bekanntmachung des Hinweises auf die Patenterteilung: **28.03.2007**
(21) Anmeldenummer: 02767140.3
(22) Anmeldetag: 07.09.2002
(51) Int. Cl.: F02D 41/40, F02D 41/16, F02D 41/14

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE IN PARTICULAR OF A MOTOR VEHICLE
PROCEDE DE FONCTIONNEMENT D'UN MOTEUR A COMBUSTION INTERNE EN PARTICULIER D'UN VEHICULE AUTOMOBILE

(30) Priorität: 05.10.2001 DE 10149236
(43) Veröffentlichungstag der Anmeldung: 14.07.2004
(73) Patentinhaber: ROBERT BOSCH GMBH, 70442 Stuttgart (DE)
(72) Erfinder: SCHULMEISTER, Ulrich, 71732 Tamm (DE); KUFFERATH, Andreas, 71706 Markgroeningen (DE); RICKEN, Volker, 71706 Markgroeningen (DE)
(86) Internationale Anmeldenummer: PCT/DE2002/003340
(87) Internationale Veröffentlichungsnummer: WO 2003/031792

(56) Entgegenhaltungen:
- EP-A- 0 889 218
- EP-A- 0 903 481
- WO-A-00/08328
- DE-A- 19 928 825
- US-A- 5 875 761

## Beschreibung

### Stand der Technik

Die Erfindung geht aus von einem Verfahren zum Betreiben einer Brennkraftmaschine insbesondere eines Kraftfahrzeugs, bei dem der für eine Verbrennung einzuspritzende Kraftstoff während einer Ansaugphase oder während einer Verdichtungsphase direkt in einen Brennraum eingespritzt wird. Des weiteren betrifft die Erfindung eine entsprechende Brennkraftmaschine insbesondere für ein Kraftfahrzeug sowie ein entsprechendes Steuergerät für eine derartige Brennkraftmaschine.

Ein derartiges Verfahren ist von Brennkraftmaschinen mit Direkteinspritzung allgemein bekannt z.B. aus WO 00/08328. Dort wird ein sogenannter Schichtbetrieb und ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt.

Im Schichtbetrieb wird der Kraftstoff während der Verdichtungsphase der Brennkraftmaschine in den Brennraum derart eingespritzt, daß sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, daß die eingespritzte Kraftstoffwolke sich aufgrund einer entsprechenden Ausformung des Ansaugbereichs bereits während bzw. unmittelbar nach der Einspritzung bei der Zündkerze befindet und von dieser entzündet wird. Ebenfalls ist es möglich, daß die eingespritzte Kraftstoffwolke durch entsprechende Ausformungen insbesondere der Oberfläche des Kolbens zu der Zündkerze geführt und dann erst entzündet wird. Bei beiden Brennverfahren liegt keine gleichmäßige Kraftstoffverteilung im Brennraum vor, sondern eine Schichtladung.

Der Vorteil des Schichtbetriebs liegt darin, daß dort mit einer sehr geringen Kraftstoffmenge die anliegenden kleineren Lasten von der Brennkraftmaschine ausgeführt werden können.

Im für insbesondere größere Lasten vorgesehenen Homogenbetrieb wird der Kraftstoff während der Ansaugphase der Brennkraftmaschine eingespritzt, so daß eine Verwirbelung und damit eine homogene Verteilung des Kraftstoffs im Brennraum noch ohne weiteres vor der Entzündung des Luft/Kraftstoff-Gemischs erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird. Bei Bedarf kann auch bei kleineren Lasten der Homogenbetrieb eingesetzt werden.

Im Schichtbetrieb wird die Drosselklappe in dem zu dem Brennraum führenden Ansaugrohr weit geöffnet und die Verbrennung wird im wesentlichen nur durch die einzuspritzende Kraftstoffmasse gesteuert und/oder geregelt. Im Homogenbetrieb wird die Drosselklappe in Abhängigkeit von dem angeforderten Moment geöffnet bzw. geschlossen und die einzuspritzende Kraftstoffmasse wird in Abhängigkeit von der angesaugten Luftmasse gesteuert und/oder geregelt.

In beiden Betriebsarten, also im Schichtbetrieb und im Homogenbetrieb, wird die einzuspritzende Kraftstoffmasse in Abhängigkeit zusätzlich von einer Mehrzahl weiterer Eingangsgrößen auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Weiterhin ist es möglich, den im Ansaugrohr vor dem Brennraum vorhandenen Unterdruck dazu zu verwenden, beispielsweise einen Bremskraftverstärker des Kraftfahrzeugs zu betreiben. Dieser Unterdruck im Ansaugrohr ist dabei betragsmäßig umso größer, je weiter die Drosselklappe geschlossen, also angedrosselt ist.

Im Leerlaufbetrieb ist es - wie bereits erwähnt - vorgesehen, die Brennkraftmaschine im Schichtbetrieb zu betreiben. Aufgrund der weit geöffneten Drosselklappe besteht dann jedoch die Möglichkeit, daß der im Ansaugrohr vorhandene Unterdruck nicht mehr ausreicht, um z.B. den Bremskraftverstärker zu betreiben. In diesem Fall muß in den Homogenbetrieb umgeschaltet werden, um durch die Androsselung der Drosselklappe den ausreichenden Unterdruck wieder zu erreichen.

Die Anwendung des Homogenbetriebs im Leerlauf der Brennkraftmaschine kann jedoch - je nach Ausgestaltung der Brennkraftmaschine, insbesondere der Kontur und der zeitlichen Steuerung der Nockenwelle - den Nachteil haben, daß erhöhte Laufunruhen auftreten, die für einen Benutzer im Leerlauf besonders stark wahrnehmbar sind.

### Aufgabe und Vorteile der Erfindung

Aufgabe der Erfindung ist es, ein Verfahren zum Betreiben einer Brennkraftmaschine sowie eine Brennkraftmaschine zu schaffen, bei denen im Leerlaufbetrieb immer eine optimale Laufruhe vorhanden ist, wobei zusätzlich ein ausreichender Unterdruck im Ansaugrohr verfügbar sein muß.

Diese Aufgabe wird bei einem Verfahren der eingangs genannten Art erfindungsgemäß dadurch gelöst, daß im Leerlaufbetrieb die einzuspritzende Kraftstoffmasse auf mindestens zwei Kraftstoffanteile aufgeteilt wird, von denen ein erster Kraftstoffanteil in der Ansaugphase in den Brennraum eingespritzt wird, und von denen ein zweiter Kraftstoffanteil nach der Einspritzung des ersten Kraftstoffanteils in der Ansaug- oder in der Verdichtungsphase in den Brennraum eingespritzt wird. Bei einer Brennkraftmaschine und einem Steuergerät der eingangs genannten Art wird die Aufgabe erfindungsgemäß entsprechend gelöst.

Durch die vorstehende Einspritzung kann ein sicheres Durchbrennverhalten des gesamten Luft/Kraftstoff-Gemischs erreicht werden, was zu einer gesteuerten Laufruhe der Brennkraftmaschine führt.

Gleichzeitig ist es bei dem vorstehenden Ablauf möglich, die Drosselklappe während des Leerlaufbetriebs anzudrosseln. Dies gewährleistet einen ausreichend großen Unterdruck z.B. für den Betrieb des Bremskraftverstärkers.

Unabhängig davon muß bei der Erfindung insgesamt keine Veränderung des an sich vorgesehenen Luft/Kraftstoff-Verhältnisses vorgenommen werden, so daß insbesondere ein Lambda gleich Eins aufrechterhalten werden kann. Dies ist gleichbedeutend mit der Möglichkeit einer guten Abgasreinigung.

Von besonderer Bedeutung ist die Realisierung des erfindungsgemäßen Verfahrens in der Form eines Computerprogramms, das für ein Steuergerät einer Brennkraftmaschine insbesondere eines Kraftfahrzeugs vorgesehen ist. Das Computerprogramm weist Programmcode auf, der dazu geeignet ist, das erfindungsgemäße Verfahren durchzuführen, wenn er auf einem Computer ausgeführt wird. Weiterhin kann der Programmcode auf einem computerlesbaren Datenträger gespeichert sein, beispielsweise auf einem sogenannten Flash-Memory. In diesen Fällen wird also die Erfindung durch das Computerprogramm realisiert, so daßdieses Computerprogramm in gleicher Weise die Erfindung darstellt wie das Verfahren, zu dessen Ausführung das Computerprogramm geeignet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt eine schematische Darstellung eines Ausführungsbeispiels einer erfindungsgemäßen Brennkraftmaschine, und
- Figur 2: zeigt eine schematische Darstellung eines Ausführungsbeispiels einer Aufteilung der eingespritzten Kraftstoffmasse nach dem erfindungsgemäßen Verfahren.

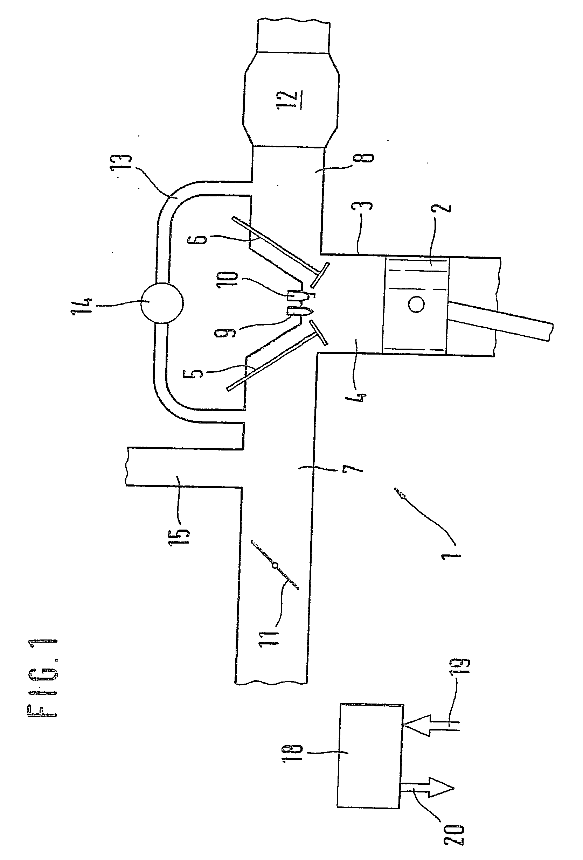

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt. Ebenfalls sind dem Brennraum 4 ein Einspritzventil 9 und eine Zündkerze 10 zugeordnet.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. An das Abgasrohr 8 schließt sich ein Katalysatorsystem 12 an.

Zwischen der Drosselklappe 11 und dem Brennraum 4 mündet eine Abgasrückführleitung 13 in das Ansaugrohr 7. Die Abgasrückführleitung 13 ist über ein Abgasrückführventil 14 vor oder ggf. nach dem Katalysatorsystem 12 an das Abgasrohr 8 angeschlossen. Die Menge des rückgeführten Abgases ist abhängig von der Stellung des Abgasrückführventils 14.

Zwischen der Drosselklappe 11 und der Abgasrückführleitung 13 zweigt ein Unterdruckrohr 15 ab, das unter anderem zu einem Unterdruckspeicher führt. Mit Hilfe des auf diese Weise aus dem Ansaugrohr 7 abgezweigten Unterdrucks kann beispielsweise ein Bremskraftverstärker des Kraftfahrzeugs betrieben werden.

Dem Zylinder 3 ist das Einspritzventil 9 zugeordnet, mit dem Kraftstoff in den Brennraum 4 der Brennkraftmaschine 1 eingespritzt werden kann. Ebenfalls ist die Zündkerze 10 in den Zylinder 3 eingeschraubt, mit der der eingespritzte Kraftstoff entzündet werden kann.

In einem sogenannten Schichtbetrieb der Brennkraftmaschine 1 wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich an eine für die Entflammung geeignete Stelle insbesondere in der Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird.

In einem sogenannten Homogenbetrieb der Brennkraftmaschine 1 wird die Drosselklappe 11 in Abhängigkeit von der erwünschten, zugeführten Luftmasse teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben.

Die im Schichtbetrieb und im Homogenbetrieb von dem Einspritzventil 9 in den Brennraum 4 eingespritzte Kraftstoffmasse wird von einem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory oder einem Read-Only-Memory ein Programm abgespeichert hat, das dazu geeignet ist, die genannte Steuerung und/oder Regelung durchzuführen.

Das Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor und einem Drehzahlsensor verbunden. Des weiteren ist das Steuergerät 18 mit einem Fahrpedalsensor verbunden, der ein Signal erzeugt, das die Stellung eines von einem Fahrer betätigbaren Fahrpedals angibt. Das Steuergerät 18 erzeugt Ausgangssignale 20, mit denen über Aktoren das Verhalten der Brennkraftmaschine 1 entsprechend der erwünschten Steuerung und/oder Regelung beeinflußt werden kann. Beispielsweise ist das Steuergerät 18 mit dem Einspritzventil 9, der Zündkerze 10 und der Drosselklappe 11 verbunden und erzeugt die zu deren Ansteuerung erforderlichen Signale.

Der Schichtbetrieb ist vorzugsweise für den Leerlauf- und Teillastbetrieb der Brennkraftmaschine 1 vorgesehen, während der Homogenbetrieb für den gesamten Betriebsbereich, insbesondere für den Vollastbetrieb geeignet ist.

Da im Leerlaufbetrieb und in einem leerlaufnahen Bereich Laufunruhen der Brennkraftmaschine 1 besonders stark von einem Benutzer zur Kenntnis genommen werden können, ist in diesen Bereichen eine hohe Laufruhe der Brennkraftmaschine 1 wesentlich.

Wird der Leerlauf im Schichtbetrieb durchgeführt, so ist es möglich, daß aufgrund der im Schichtbetrieb weit geöffneten Drosselklappe 11 der aus dem Ansaugrohr 7 über das Unterdruckrohr 15 abgezweigte Unterdruck betragsmäßig zu gering wird, um beispielsweise den genannten Bremskraftverstärker sicher zu betreiben. Dies ergibt sich daraus, daß bei einer weit geöffneten Drosselklappe 11 der im Ansaugrohr 7 entstehende Unterdruck betragsmäßig geringer ist als bei einer weniger geöffneten, also angedrosselten Brennkraftmaschine 1.

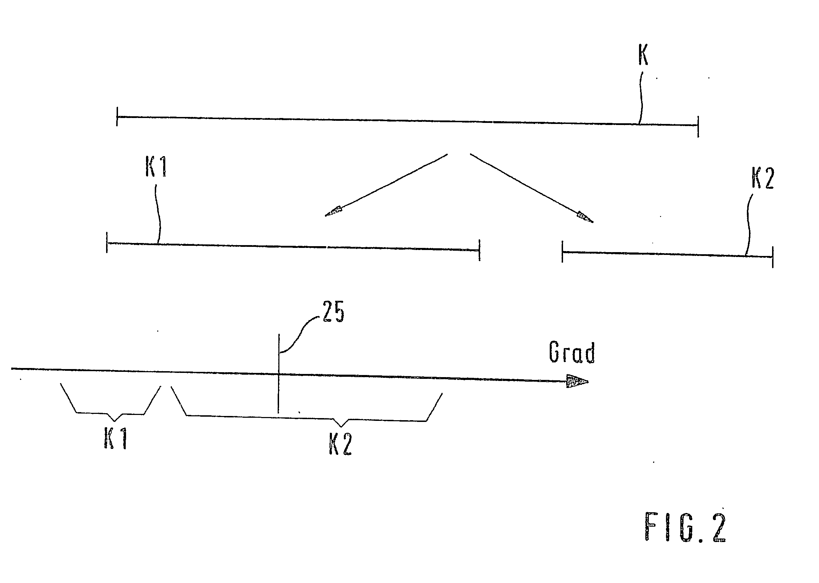

Unter anderem in diesem Fall, also im Leerlauf- oder leerlaufnahen Bereich der Brennkraftmaschine 1, wird von dem Steuergerät 18 das nachfolgend anhand der Figur 2 beschriebene Verfahren durchgeführt.

Zuerst ermittelt das Steuergerät 18 in Abhängigkeit von den aktuellen Betriebsgrößen der Brennkraftmaschine 1, wieviel Krafstoff bei der nächsten Verbrennung dem Brennraum 4 zugeführt werden muß. Diese gesamte Kraftstoffmasse ist in der Figur 2 mit der Bezeichnung K gekennzeichnet und symbolisch dargestellt.

Danach wird diese Kraftstoffmasse K in zwei Teile aufgeteilt, die in der Figur 2 mit den Bezeichnungen-Kl und K2 gekennzeichnet sind. Die prozentuale Aufteilung der Kraftstoffmasse K in die beiden Kraftstoffanteile kann dabei völlig flexibel vorgenommen werden. Beispielsweise kann die Aufteilung hälftig erfolgen. Ebenfalls ist es möglich, die Aufteilung in Abhängigkeit von Betriebsgrößen der Brennkraftmaschine 1 durchzuführen, z.B. in Abhängigkeit von der Drehzahl der Brennkraftmaschine 1 und/oder von dem Unterdruck im Ansaugrohr 7.

Der erste Kraftstoffanteil K1 wird während der Ansaugphase in den Brennraum 4 der Brennkraftmaschine 1 eingespritzt. Vorzugsweise wird der erste Kraftstoffanteil K1 in einem Bereich von etwa 400 Grad bis etwa 200 Grad vor dem oberen Totpunkt in den Brennraum 4 eingespritzt. Die Drosselklappe 11 wird derart angedrosselt, daß zumindest eine betragsmäßige Erhöhung des Unterdrucks im Ansaugrohr 7 entsteht. Die Androsselung kann dabei entsprechend dem Homogenbetrieb eingestellt werden.

Aufgrund der Einspritzung des ersten Kraftstoffanteils K1 während der Ansaugphase ergibt sich daraus ein im wesentlichen homogenes Grundgemisch, das - da es sich nicht um die gesamte einzuspritzende Kraftstoffmasse K handelt - mager ist. Dieses Grundgemisch wird im wesentlichen innerhalb des gesamten Brennraums 4 verwirbelt.

Der zweite Kraftstoffanteil K2 wird nach dem ersten Kraftstoffanteil K1 eingespritzt, und zwar so, daß ein sicheres Durchbrennverhalten des gesamten Luft/Kraftstoff-Gemischs erreicht wird, insbesondere so, daß sich im Zeitpunkt der Zündung eine fette Zone innerhalb des mageren, homogenen Grundgemischs im Bereich der Zündkerze 10 befindet. Der zweite Kraftstoffanteil K2 kann zu diesem Zweck während der Ansaugphase oder während der Verdichtungsphase eingespritzt werden, also in einem Bereich von etwa 200 Grad vor dem oberen Totpunkt bis etwa zu oder nach demselben, insbesondere nahe dem Zündzeitpunkt.

Die Stellung der Drosselklappe 11 kann derart eingestellt werden, daß zumindest eine betragsmäßige Erhöhung des Unterdrucks im Ansaugrohr 7 entsteht. Die Androsselung kann dabei entsprechend dem Homogenbetrieb eingestellt werden.

Die Winkelstellungen der Einspritzungen des ersten und zweiten Kraftstoffanteils K1 und K2 sind in der Figur 2 schematisch über dem Kurbelwinkel in Grad aufgetragen. Dabei ist mit der Bezugsziffer 25 diejenige Winkelstellung gekennzeichnet, bei der die Brennkraftmaschine 1 von der Ansaugphase in die Verdichtungsphase übergeht. Wesentlich ist, daß der erste Kraftstoffanteil K1 während der Ansaugphase und der zweite Kraftstoffanteil danach während der Ansaug- oder der Verdichtungsphase eingespritzt wird.

Der Zeitpunkt der Einspritzung des zweiten Kraftstoffanteils K2 hängt beispielsweise von der Ausgestaltung des Brennraums 4 sowie gegebenenfalls von weiteren Betriebsgrößen der Brennkraftmaschine 1 ab. So kann bei einem Kolben 2 mit einer eher ebenen Oberfläche ein Brennverfahren angewendet werden, bei dem der Kraftstoff von dem Einspritzventil 9 unmittelbar in den Bereich der Zündkerze 10 eingespritzt wird, so daß in diesem Fall die Einspritzung des zweiten Kraftstoffanteils K2 eher kurz vor dem oberen Totpunkt zu erfolgen hat, also in der Verdichtungsphase. Es kann jedoch auch ein Kolben 2 mit einer muldenförmigen Oberfläche vorgesehen sein, mit dessen Hilfe der eingespritzte Kraftstoff zu der Zündkerze geführt wird, mit der Folge, daß in diesem Fall die Einspritzung des zweiten Kraftstoffanteils K2 eher früher zu erfolgen hat, also gegebenenfalls noch in der Ansaugphase, damit der Kraftstoff genügend Zeit hat, zu der Zündkerze 10 zu gelangen.

Aus dem vorstehend beschriebenen Ablauf resultiert ein insgesamt gutes Durchbrennverhalten, was wiederum zu geringen zyklischen Schwankungen eines mittleren Verbrennungsdrucks und damit zu einer hohen Laufruhe führt.

Gleichzeitig wird durch das vorstehend beschriebene Verfahren noch folgendes erreicht:

Durch die Aufteilung der einzuspritzenden Kraftstoffmasse K auf die beiden Kraftstoffanteile K1 und K2 wird das Luft/Kraftstoff-Verhältnis des insgesamt dem Brennraum 4 zugeführten Gemischs, also beispielsweise Lambda gleich Eins, nicht verändert. Dies ist vorteilhaft für die Reinigung der bei der Verbrennung entstehenden Abgase.

Gleichzeitig kann jedoch durch die entsprechende Stellung der Drosselklappe 11 erreicht werden, daß über das Unterdruckrohr 15 ein Unterdruck abgezweigt werden kann, der ausreichend ist, um beispielsweise den Bremskraftverstärker des Kraftfahrzeugs zu betreiben.

Das vorstehend beschriebene Verfahren kann auch in einem leerlaufnahen Bereich, gegebenenfalls auch im Teillastbereich der Brennkraftmaschine 1 angewendet werden.

Anstelle der beiden Einspritzungen von Kraftstoffanteilen ist es möglich, daß eine Mehrzahl von Einspritzungen durchgeführt werden, daß also die gesamte einzuspritzende Kraftstoffmasse K durch ein beispielsweise getaktetes Einspritzventil während der gesamten Ansaugphase und Verdichtungsphase in den Brennraum der Brennkraftmaschine 1 eingespritzt wird. Dabei kann die einzuspritzende Kraftstoffmasse K variabel, insbesondere in Abhängigkeit von Betriebsgrößen der Brennkraftmaschine 1, auf die einzelnen Einspritzungen aufgeteilt werden.

## Patentansprüche

1. Verfahren zum Betreiben einer Brennkraftmaschine (1), bei dem der für eine Verbrennung einzuspritzende Kraftstoff während einer Ansaugphase oder während einer Verdichtungsphase direkt in einen Brennraum (4) eingespritzt wird, bei dem Luft über eine Drosselklappe (11) zuführbar ist, und bei dem im Leerlaufbetrieb die einzuspritzende Kraftstoffmasse (K) auf mindestens zwei Kraftstoffanteile aufgeteilt wird, von denen ein erster Kraftstoffanteil (K1) in der Ansaugphase in den Brennraum (4) eingespritzt wird, und von denen ein zweiter Kraftstoffanteil (K2) nach der Einspritzung des ersten Kraftstoffanteils (K1) in der Ansaug- und/oder in der Verdichtungsphase in den Brennraum (4) eingespritzt wird, **dadurch gekennzeichnet, dass** während der Einspritzung des ersten Kraftstoffanteils (K1) die Drosselklappe (11) angedrosselt wird.

2. Verfahren nach Anspruch 1, **dadurch gekennzeichnet, dass** der erste Kraftstoffanteil (K1) im Bereich von etwa 400 Grad bis etwa 200 Grad vor dem oberen Totpunkt eingespritzt wird.

3. Verfahren nach einem der Ansprüche 1 oder 2, **dadurch gekennzeichnet, dass** der zweite Kraftstoffanteil (K2) bei einer Winkelstellung eingespritzt wird, bei der sich ein sicheres Durchbrennverhalten des gesamten Luft/Kraftstoff-Gemischs ergibt.

4. Verfahren nach einem der Ansprüche 1 bis 3, **dadurch gekennzeichnet, dass** der zweite Kraftstoffanteil (K2) im Bereich von etwa 200 Grad vor dem oberen Totpunkt bis etwa zum oberen Totpunkt eingespritzt wird.

5. Verfahren nach einem der vorstehenden Ansprüche, **dadurch gekennzeichnet, dass** während der Einspritzung des zweiten Kraftstoffanteils (K2) die Drosselklappe (11) angedrosselt wird.

6. Verfahren nach einem der vorstehenden Ansprüche, **dadurch gekennzeichnet, dass** durch die Aufteilung der Kraftstoffmasse (K) die Laufruhe der Brennkraftmaschine (1) verbessert wird.

7. Verfahren nach einem der vorstehenden Ansprüche, **dadurch gekennzeichnet, dass** auch mehr als zwei Kraftstoffanteile eingespritzt werden.

8. Verfahren nach einem der vorstehenden Ansprüche, **gekennzeichnet durch** die Anwendung in einem leerlaufnahen Bereich oder in einem Teillastbetrieb.

9. Computerprogramm für ein Steuergerät (18) einer Brennkraftmaschine (1), mit Programmcode, der dazu geeignet ist, das Verfahren nach einem der Ansprüche 1 bis 9 durchzuführen, wenn er auf einem Computer ausgeführt wird.

10. Computerprogramm nach Anspruch 9, wobei der Programmcode auf einem computerlesbaren Datenträger gespeichert ist.

11. Brennkraftmaschine (1), bei der der für eine Verbrennung einzuspritzende Kraftstoff während einer Ansaugphase oder während einer Verdichtungsphase direkt in einen Brennraum (4) eingespritzt wird, und bei der Luft über eine Drosselklappe (11) zuführbar ist, mit einem Steuergerät (18), durch das im Leerlaufbetrieb die einzuspritzende Kraftstoffmasse (K) auf mindestens zwei Kraftstoffanteile aufgeteilt wird, von denen ein erster Krattstoffanteil (K1) in der Ansaugphase in den Brennraum (4) eingespritzt wird, und von denen ein zweiter Kraftstoffanteil (K2) nach der Einspritzung des ersten Kraftstoffanteils (K1) in der Ansaug- und/oder in der Verdichtungsphase in den Brennraum (4) eingespritzt wird, **dadurch gekennzeichnet, dass** durch das Steuergerät (18) während der Einspritzung des ersten Kraftstoffanteils (K1) die Drosselklappe (11) angedrosselt wird.

12. Steuergerät (18) für eine Brennkraftmaschine (1), bei der der für eine Verbrennung einzuspritzende Kraftstoff während einer Ansaugphase oder während einer Verdichtungsphase direkt in einen Brennraum (4) eingespritzt wird, und bei der Luft über eine Drosselklappe (11) zuführbar ist, wobei durch das Steuergerät (18) im Leerlaufbetrieb die einzuspritzende Kraftstoffmasse (K) auf mindestens zwei Kraftstoffantelle aufgeteilt wird, von denen ein erster Kraftstoffanteil (K1) in der Ansaugphase in den Brennraum (4) eingespritzt wird, und von denen ein zweiter Kraftstoffanteil (K2) nach der Einspritzung des ersten Kraftstoffanteils (K1) in der Ansaug- und/oder in der Verdichtungsphase in den Brennraum (4) eingespritzt wird, **dadurch gekennzeichnet, dass** durch das Steuergerät (18) während der Einspritzung des ersten Kraftstoffanteils (K1) die Drosselklappe (11) angedrosselt wird.

## Claims

1. Method for operating an internal combustion engine (1), in which method the fuel which is to be injected for a combustion is injected directly into a combustion chamber (4) during an intake phase or during a compression phase, in which method air can be supplied via a throttle flap (11), and in which method, in idle operation, the fuel mass (K) to be injected is divided into at least two fuel portions, a first fuel portion (K1) of which is injected into the combustion chamber (4) in the intake phase, and a second fuel portion (K2) of which is injected into the combustion chamber (4) in the intake phase and/or in the compression phase after the injection of the first fuel portion (K1), **characterized in that** the throttle flap (11) is throttled during the injection of the first fuel portion (K1).

2. Method according to Claim 1, **characterized in that** the first fuel portion (K1) is injected in the range from approximately 400. degrees to approximately 200 degrees before top dead centre.

3. Method according to one of Claims 1 or 2, **characterized in that** the second fuel portion (K2) is injected at an angular position which gives reliable combustion behaviour of the entire air/fuel mixture.

4. Method according to one of Claims 1 to 3, **characterized in that** the second fuel portion (K2) is injected in the range from approximately 200 degrees before top dead centre to approximately top dead centre.

5. Method according to one of the preceding claims, **characterized in that** the throttle flap (11) is throttled during the injection of the second fuel portion (K2).

6. Method according to one of the preceding claims, **characterized in that** the division of the fuel mass (K) improves the running smoothness of the internal combustion engine (1).

7. Method according to one of the preceding claims, **characterized in that** more than two fuel portions are injected.

8. Method according to one of the preceding claims, **characterized by** its use in a range close to idle or in part-load operation.

9. Computer program for a control unit (18) of an internal combustion engine (1) having program code which, if it is executed on a computer, is suitable for carrying out the method according to one of Claims 1 to 9.

10. Computer program according to Claim 9, the program code being stored on a computer-readable data carrier.

11. Internal combustion engine (1) in which the fuel which is to be injected for a combustion is injected directly into a combustion chamber (4) during an intake phase or during a compression phase, and in which air can be supplied via a throttle flap (11), having a control unit (18), by means of which, in idle operation, the fuel mass (K) to be injected is divided into at least two fuel portions, a first fuel portion (K1) of which is injected into the combustion chamber (4) in the intake phase, and a second fuel portion (K2) of which is injected into the combustion chamber (4) in the intake phase and/or in the compression phase after the injection of the first fuel portion (K1), **characterized in that** the throttle flap (11) is throttled by means of the control unit (18) during the injection of the first fuel portion (K1).

12. Control unit (18) for an internal combustion engine (1) in which the fuel which is to be injected for a combustion is injected directly into a combustion chamber (4) during an intake phase or during a compression phase, and in which air can be supplied via a throttle flap (11), wherein in idle operation, the fuel mass (K) to be injected is divided by means of the control unit (18) into at least two fuel portions, a first fuel portion (K1) of which is injected into the combustion chamber (4) in the intake phase, and a second fuel portion (K2) of which is injected into the combustion chamber (4) in the intake phase and/or in the compression phase after the injection of the first fuel portion (K1), **characterized in that** the throttle flap (11) is throttled by means of the control unit (18) during the injection of the first fuel portion (K1) .

## Revendications

1. Procédé de fonctionnement d'un moteur à combustion interne (1) dans lequel le carburant à injecter pour une combustion est injecté directement dans une chambre de combustion (4) pendant une phase d'admission ou pendant une phase de compression, de l'air peut être acheminé par un volet d'étranglement (11) et la masse de carburant à injecter (K) est répartie, au ralenti, sur au moins deux fractions de carburant dont une première fraction de carburant (K1) est injectée pendant la phase d'admission dans la chambre de combustion (4), et dont une deuxième fraction de carburant (K2) est injectée dans la chambre de combustion (4) après l'injection de la première fraction de carburant (K1) dans la phase d'admission et/ou de compression,
**caractérisé en ce que**
pendant l'injection de la première fraction de carburant (K1), le clapet d'étranglement (11) est étranglé.

2. Procédé selon la revendication 1,
**caractérisé en ce que**
la première fraction de carburant (K1) est injectée dans la plage d'environ 400 degrés à environ 200 degrés avant le point mort haut.

3. Procédé selon l'une quelconque des revendications 1 ou 2,
**caractérisé en ce que**
la deuxième fraction de carburant (K2) est injectée à une position angulaire dans laquelle on obtient une combustion complète certaine de tout le mélange air/carburant.

4. Procédé selon l'une quelconque des revendications 1 à 3,
**caractérisé en ce que**
la deuxième fraction de carburant (K2) est injectée dans le domaine d'environ 200 degrés avant le point mort haut jusqu'approximativement le point mort haut.

5. Procédé selon l'une quelconque des revendications précédentes,
**caractérisé en ce que**
pendant l'injection de la deuxième fraction de carburant (K2), le volet d'étranglement (11) est étranglé.

6. Procédé selon l'une quelconque des revendications précédentes,
**caractérisé en ce que**
la répartition de la masse de carburant (K) permet d'améliorer la régularité de fonctionnement du moteur à combustion interne (1).

7. Procédé selon l'une quelconque des revendications précédentes,
**caractérisé en ce que**
plus de deux fractions de carburant peuvent aussi être injectées.

8. Procédé selon l'une quelconque des revendications précédentes,
**caractérisé par**
l'utilisation dans un domaine proche du ralenti ou dans un mode à charge partielle.

9. Programme informatique pour un appareil de commande (18) d'un moteur à combustion interne (1) comportant un code programme propre à réaliser le procédé selon l'une quelconque des revendications 1 à 9, lorsque il est exécuté sur un ordinateur.

10. Programme informatique selon la revendication 9, dans lequel le code programme est enregistré sur un support de données lisible par un ordinateur.

11. Moteur à combustion interne (1) dans lequel le carburant à injecter pour une combustion est injecté directement dans une chambre de combustion (4) pendant une phase d'admission ou pendant une phase de compression, et dans lequel de l'air peut être acheminé par l'intermédiaire d'un volet d'étranglement (11), comportant un appareil de commande (18) qui permet de répartir la masse de carburant à injecter (K) au ralenti sur au moins deux fractions de carburant, dont une première fraction de carburant (K1) est injectée dans la chambre de combustion (4) dans la phase d'admission, et dont une deuxième fraction de carburant (K2) est injectée dans la chambre de combustion (4) après l'injection de la première fraction de carburant (K1 dans la phase d'admission et/ou dans la phase de compression,
**caractérisé en ce que**
l'appareil de commande (18) étrangle le volet d'étranglement (11) pendant l'injection de la première fraction de carburant (K1).

12. Appareil de commande (18) pour un moteur à combustion interne (1), dans lequel, le carburant à injecter pour une combustion est injecté directement dans la chambre de combustion (4) pendant une phase d'admission ou pendant une phase de compression et dans lequel de l'air peut être acheminé par un volet d'étranglement (11), la masse de carburant à injecter (K) étant répartie, au ralenti, par l'appareil de commande (18) sur au moins deux fractions de carburant dont une première fraction de carburant (K1) est injectée dans la phase d'admission, dans la chambre de combustion (4), et dont une deuxième fraction de carburant (K2) est injectée dans la chambre de combustion (4) après l'injection de la première fraction de carburant (K1) dans la phase d'admission et/ou de compression,
**caractérisé en ce que**
pendant l'injection de la première fraction de carburant (K1), le clapet d'étranglement (11) est étranglé par l'appareil de commande (18).
